**Europäisches Patentamt**

**European Patent Office**

**Office européen des brevets**

(19)

(11) Numéro de publication : **0 320 420 B1**

(12) **FASCICULE DE BREVET EUROPEEN**

(45) Date de publication du fascicule du brevet :
**06.05.92 Bulletin 92/19**

(51) Int. Cl.⁵ : **B61D 3/18, B60F 1/04**

(21) Numéro de dépôt : **88430031.0**

(22) Date de dépôt : **07.12.88**

(54) **Véhicules et dispositifs de transport transformables en wagons et boggies ferroviaires pour cet usage.**

(30) Priorité : **11.12.87 FR 8717535
28.10.88 FR 8814480**

(43) Date de publication de la demande :
**14.06.89 Bulletin 89/24**

(45) Mention de la délivrance du brevet :
**06.05.92 Bulletin 92/19**

(84) Etats contractants désignés :
**AT BE CH DE ES FR GB GR IT LI LU NL SE**

(56) Documents cités :
**EP-A- 0 143 614
DE-C- 961 714**

(56) Documents cités :
**FR-A- 1 358 504
FR-A- 1 561 318
FR-A- 1 598 994
FR-A- 2 575 115**

(73) Titulaire : **BRETCO
Le Parc aux Boeufs, Z.I.
F-01230 Fère-en-Tardenois (FR)**

(72) Inventeur : **Gourdin, Jean-Paul
2 Impasse du Soc Les Maissons de Tamaris
F-83500 La Seyne Sur Mer (FR)**

(74) Mandataire : **Deydier, Bruno et al
CABINET J. BONNET THIRION 95 Bd.
Beaumarchais
F-75003 Paris (FR)**

Jouve, 18, rue Saint-Denis, 75001 PARIS

EP 0 320 420 B1

## Description

La présente invention a pour objet des dispositifs de transport de marchandises facilement transformables en wagons et des boggies ferroviaires destinés à cette transformation.

Le secteur technique de l'invention est celui de la construction des véhicules et des dispositifs de transport.

On connaît des véhicules de transport de marchandises comportant un plateau qui est muni, à l'avant, d'un pivot et d'une béquille escamotable et à l'arrière d'un train routier escamotable, de sorte qu'il peut être utilisé comme semi-remorque routière et qui peut, en outre, être posé sur des essieux ou boggies équipés de roues à boudins pouvant rouler sur des rails, de sorte que le véhicule peut être transformé en wagon et être attelé à un train.

Le brevet FR. 1.368.963. (P. PERROT) décrit des semi-remorques de ce type qui peuvent être posées sur deux boggies porteurs amovibles et dans lesquelles chaque boggie est équipé d'un châssis auxiliaire qui porte un système d'attelage ferroviaire standard.

L'assemblage entre la plate-forme de la semi-remorque et les chassis auxiliaires avant et arrière et réalisé au moyen de verrous latéraux. De plus, le pivot de la semi-remorque participe à l'assemblage de celle-ci avec le châssis auxiliaire avant.

Le brevet FR. 78/18.875 (Publication 2.395.852) - (THE BI-MODAL CORPORATION) décrit des semi-remorques mixtes rail-route qui comportent, à l'arrière, un train routier escamotable et un boggie ferroviaire, également escamotable, qui reste fixé à la semi-remorque. Le châssis de la semi-remorque repose sur le train routier et sur l'essieu ferroviaire par l'intermédiaire de ressorts pneumatiques.

La demande de brevet européen EP-A-0 112 778 (P. PERROT) décrit des véhicules mixtes utilisables pour des transports par route ou par rail, qui comportent un plateau porteur équipé de longerons ayant une section transversale en forme d'oméga. Ce plateau est équipé d'un train routier escamotable et il peut être posé sur deux boggies amovibles qui comportent chacun un châssis intermédiaire portant les dispositifs d'attelage.

Le châssis intermédiaire porte des patins mobiles verticalement, qui sont équipés de galets sur lesquels peut rouler une platine qui fait partie du plateau, de sorte que celui-ci peut être déplacé transversalement pour être centré. Le châssis intermédiaire est équipé de crochets pivotants qui s'accrochent sur les bords latéraux du plateau pour verrouiller le plateau avec les boggies.

De plus, le plateau comporte des galets transversaux qui prennent appui sur le châssis intermédiaire, de sorte que le plateau peut glisser en translation sur le châssis intermédiaire sous l'effet d'un choc.

Le brevet FR 1 598 994 (P. Perrot) décrit des semi-remorques rail-route qui comportent un châssis équipé à l'arrière d'un train routier relevable par des vérins et à l'avant d'une béquille d'appui, lequel châssis peut être posé et verrouillé sur deux boggies ferroviaires équipés chacun d'un châssis auxiliaire qui porte des organes d'attelage. Le verrouillage est réalisé par des verrous transversaux.

Le brevet FR 1 358 504 (C. Douheret) décrit des semi-remorques qui comportent à l'arrière des essieux porteurs de roues ferroviaires auxquelles on peut adapter des roues routières et dont la partie avant peut être posée sur un avant-train ferroviaire par l'intermédiaire du pivot d'attelage de la semi-remorque.

Le châssis et l'avant-train ferroviaire sont verrouillés à l'aide de goupilles.

La publication EP A 0 143 614 (Trailer Train Limited) décrit des semi-remorques qui sont équipés d'un train routier relevable.

L'extrémité arrière de chaque semi-remorque comporte un sommier de caisse qui permet de poser le châssis sur un boggie ferroviaire et de le verrouiller à celui-ci.

L'extrémité avant du châssis porte un timon qui permet de l'atteler de façon pivotante à l'extrémité arrière du wagon qui précède.

Le brevet DE-C-961 714 (Schöma) décrit des remorques rail-route dont les roues routières sont démontables et remplaçables par des essieux ferroviaires rigides montés sur des châssis dont la partie supérieure est reliée au véhicule par des liaisons cylindroconiques.

La présente invention concerne non seulement des véhicules mixtes rail-route du type décrit dans les documents ci-dessus qui peuvent être utilisés soit comme semi-remorques routières soit comme wagons simples ou articulés mais elle concerne également, des plateaux qui sont incorporés à des dispositifs de transport de marchandises multi modes tels que des conteneurs qui peuvent être transportés par bateau, par avion ou par véhicules routiers et qui peuvent être transformés en wagons simples ou articulés.

Il est précisé que, par simplification, on utilisera le mot conteneur dans un sens général pour désigner non seulement des plateaux équipés d'un cadre fermé, mais également des plateaux pouvant porter une citerne ou des trémies de transport de matériaux pulvérulent, ou des plateaux simples ou équipés de ridelles.

Les dispositifs de transport de marchandises multi-mode transformables en wagons sont très pratiques du fait qu'ils permettent de transporter un lot de marchandises en passant du rail à un autre mode de transport par route, par bateau ou par avion sans avoir à transborder une par une les marchandises.

Les dispositifs de transport multi-mode transformables en wagons posent des problèmes de réalisation pratique au niveau de la pose du plateau sur les boggies ferroviaires. Il faut que le plateau se centre automatiquement par rapport aux boggies sans nécessiter des efforts importants. Il faut également que la liaison mécanique entre le plateau du dispositif et les châssis intermédiaires qui équipent les boggies résiste à des efforts de traction et de compression élevés lorsque le plateau est utilisé comme wagon incorporé dans un train.

Un objectif de la présente invention est de procurer des dispositifs de transport de marchandises transformables en wagons qui comportent des moyens perfectionnés de centrage et de liaison mécanique du plateau du dispositif de transport par rapport aux châssis intermédiaires équipant les boggies ferroviaires.

Un autre objectif de la présente invention est de procurer des dispositifs de transport de marchandises transformables à la fois en wagons normaux qui sont reliés l'un à l'autre par un attelage et en wagons articulés de sorte qu'un même plateau peut être incorporé dans une rame de wagons articulés puis dans un train normal.

Les dispositifs de transport de marchandises selon l'invention transformables en wagons comportent de façon connue, un plateau qui est équipé de longerons principaux et de deux longerons latéraux et qui peut être posé sur deux boggies ferroviaires équipés chacun d'un châssis intermédiaire qui porte des moyens de centrage et de fixation dudit plateau.

Les objectifs de l'invention sont atteints au moyen de dispositifs de transport de marchandises dans lesquels chaque châssis intermédiaire comporte une paire de broches coniques qui convergent vers le haut et qui s'étendent au-dessus de la face supérieure dudit châssis intermédiaire servant de plan d'appui dudit plateau et chaque plateau comporte, à proximité de chacune de ses deux extrémités, une paire de fourreaux creux cylindro-coniques et verticaux qui divergent vers le bas et qui sont destinés à recevoir chacun une des dites broches coniques.

Selon un mode de réalisation, chacun des fourreaux creux cylindro-coniques est relié au dit plateau par l'intermédiaire d'un organe élastique dont les dimensions et la raideur sont calculées pour que la charge du plateau l'écrase suffisamment pour que le plateau s'appuie directement sur la face supérieure d'un châssis intermédiaire lorsque les broches coniques portées par ledit châssis intermédiaire sont engagées dans lesdits fourreaux creux.

Avantageusement, chaque châssis, intermédiaire comporte deux paires de rampes de guidage latéral qui sont inclinées vers l'intérieur en descendant et qui s'étendent au-dessus de la face supérieure dudit châssis intermédiaire, lesquelles rampes sont destinées à guider latéralement et à centrer le plateau pendant qu'il est posé sur ledit châssis intermédiaire.

Avantageusement, chaque châssis intermédiaire comporte des traverses et une paire de rampes de guidage longitudinal qui sont fixées sur l'une desdites traverses, qui sont inclinées en descendant vers l'avant pour les rampes du châssis intermédiaire arrière et vers l'arrière pour les rampes du châssis intermédiaire avant et qui s'étendent au-dessus du plan d'appui du plateau sur ledit châssis intermédiaire lesquelles rampes sont destinées à guider longitudinalement et à centrer ledit plateau pendant qu'il est posé sur ledit châssis intermédiaire.

Selon un mode de réalisation, chaque châssis intermédiaire comporte deux paires de verrous de blocage, chaque verrou comportant un pêne coulissant en forme de coin qui coopère avec une rampe inclinée qui est fixée sur l'un des dits longerons principaux dudit plateau et les quatre coulisseaux sont manoeuvrés simultanément par un système de transmission de mouvement commandé par un volant.

Selon un mode de réalisation un dispositif selon l'invention comporte des boggies ferroviaires qui sont communs à deux plateaux successifs et qui permettent de former des wagons articulés entre eux et chaque boggie commun comporte deux châssis intermédiaires qui sont articulés entre eux autour d'un axe vertical confondu avec l'axe du pivot dudit boggie et chacun des châssis intermédiaires porte une paire de broches verticales coniques qui s'engagent dans une paire de fourreaux cylindro-coniques portés par chacun des dits plateaux.

L'invention a pour premier résultat des semi-remorques mixtes rail-route dans le cas ou le plateau est équipé d'un pivot d'attelage à un tracteur routier, de béquilles hydrauliques et d'un train routier relevable par vérin ou amovible.

L'invention a pour deuxième résultat des dispositifs de transport de marchandises multimode tels que des conteneurs pouvant être transportés par route, par bateau, par avion cargo ou sur des wagons plateforme et pouvant être transformés en wagons normaux ou articulés entre eux.

L'invention a pour troisième résultat des véhicules mixtes rail-route dans lesquels le plateau peut être soit posé sur deux trains routiers amovibles et être équipé d'un timon soit être posé sur deux boggies ferroviaires pour constituer un wagon normal ou un wagon articulé.

L'invention a également pour résultat des nouveaux boggies ferroviaires équipés d'un seul châssis intermédiaire pouvu de moyens d'attelage ferroviaires et équipés d'une paire de broches coniques, de deux paires de rampes de guidage latéral, d'une paire de rampes de guidage longitudinal et de verrous, lesquels boggies permettent de transformer un véhicule routier ou un conteneur en un wagon normal.

L'invention a également pour résultat des nouveaux boggies ferroviaires équipés de deux châssis intermédiaires articulés entre eux autour d'un axe vertical confondu avec l'axe du pivot du boggie, chaque châssis intermédiaire étant équipé d'une paire de broches coniques, de deux paires de rampes de guidage latéral, d'une paire de rampes de guidage longitudinal et de verrous lesquels boggies permettent de transformer deux dispositifs de transport, tels que deux semi-remorques routières équipées d'un train routier relevable ou amovible ou deux conteneurs, en deux wagons articulés entre eux et prenant appui sur un boggie commun.

Les broches coniques qui équipent les châssis intermédiaires des boggies ferroviaires et les fourreauxx coniques qui équipent les plateaux des dispositifs selon l'invention constituent des moyens de centrage précis et de liaison mécanique entre le plateau et chacun des boggies ferroviaires.

Dans le cas d'une semi-remorque mixte rail-route équipée d'un train routier relevable par vérins et de béquilles hydrauliques ou mécaniques, les broches coniques et les rampes de guidage latéral et longitudinal qui équipent les châssis auxiliaires permettent de centrer automatiquement le plateau par rapport aux boggies sans avoir à utiliser aucun appareil de manutention autre que les béquilles et les vérins de relevage du train routier portés par le plateau.

Les broches coniques peuvent être facilement dimensionnées pour résister largement aux efforts de traction et de compression lorsqu'un wagon selon l'invention est incorporé dans un train et après essais des wagons selon l'invention ont pu être homogués par la Société Nationale des Chemins de Fer Français.

Les liaisons élastiques qui sont intercalées entres les fourreaux cylindroconiques recevant les broches coniques et l'ossature du plateau permettent d'amortir la descente du plateau sur les châssis intermédiaires.

Ces liaisons élastiques ont une raideur telle qu'elles se déforment suffisamment sous l'effet du poids du plateau pour que celui-ci vienne en appui direct sur les châssis intermédiaires de sorte que le poids de la charge ne s'exerce pas sur les broches coniques qui ont à résister seulement à des efforts situés dans le plan horizontal.

Les verrous qui équipent les châssis intermédiaires permettent de solidariser le plateau avec chaque châssis intermédiaire afin d'éviter que le plateau ne risque de se soulever pendant les déplacements sur voie ferrée.

Les moyens de centrage et de liaison mécanique entre chaque plateau et un châssis intermédiaire de boggie ferroviaire permettent notamment de transformer un même plateau soit en un wagon normal équipé de deux boggies portant chacun des organes d'attelage à un autre wagon, soit en un wagon articulé en posant chaque extrémité du plateau sur un boggie commun à deux wagons successifs soit en un wagon de tête ou de queue d'une rame de wagons articulés en posant une extrémité du plateau sur un boggie portant des organes d'attelage et l'autre extrémité sur un boggie commun à deux plateaux successifs.

Ceci permet d'incorporer un même dispositif selon l'invention successivement dans une rame de wagons articulés puis dans un train de wagons normaux après passage dans une gare de triage.

La description suivante se réfère aux dessins annexés qui représentent, sans aucun caractère limitatif, des exemples de réalisation de dispositifs de transport et de véhicules mixtes rail-route selon l'invention.

La figure 1 est une vue en élévation d'un véhicule selon l'invention dans sa version semi-remorque routière.

La figure 2 est une vue en élévation d'un véhicule selon l'invention utilisé comme wagon ferroviaire.

La figure 3 est une vue en élévation d'un boggie ferroviaire amovible équipé d'un châssis intermédiaire.

Les figures 4 et 5 sont une demi-vue en plan et une vue en élévation d'un châssis intermédiaire.

La figure 6 est une vue en plan des deux extrémités du plateau d'un véhicule selon l'invention.

La figure 7 est une coupe transversale selon VII-VIII de la figure 6.

La figure 8 est une coupe transversale selon VIII-VIII de la figure 6.

La figure 9 est une coupe transversale selon IX-IX des figures 4 et 5.

Les figures 10 et 11 représentent un dispositif de transport de marchandises selon l'invention utilisé respectivement comme wagon normal équipé de deux boggies portant chacun des organes d'attelage à un autre wagon et comme comme conteneur transportable par bateau, par avion ou par véhicule terrestre.

La figure 12 représente un dispositif selon la figure 10 qui est transformable en semi-remorque routière en l'équipant d'un train routier amovible, de bequilles amovibles et d'un pivot amovible d'attelage à un tracteur routier.

La figure 13 représente une partie d'un train comportant deux rames de wagons articulés entre eux qui sont constitués de dispositifs selon l'invention .

La figure 14 est une vue en élévation d'un boggie ferroviaire commun à deux wagons articulés successifs.

La figure 15 est une vue en élévation des deux châssis intermédiaires d'un boggie commun.

La figure 16 est une coupe transversale selon XVI XVI de la figure 15.

La figure 17 est une demi-coupe transversale d'un deuxième mode de réalisation d'un dispositif de verrouillage d'un plateau sur un châssis intermédiaire.

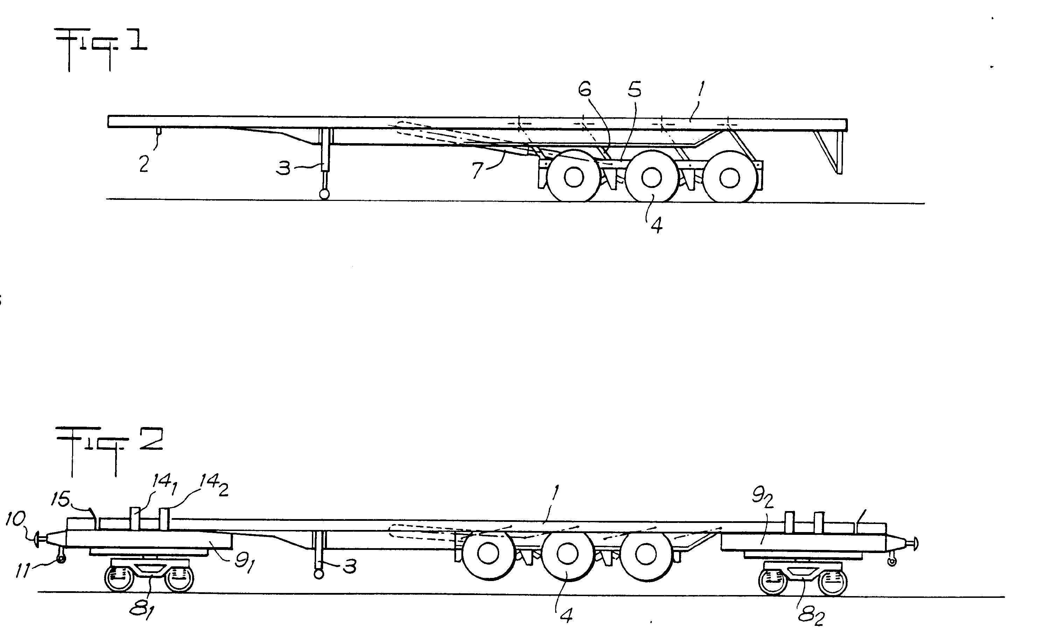

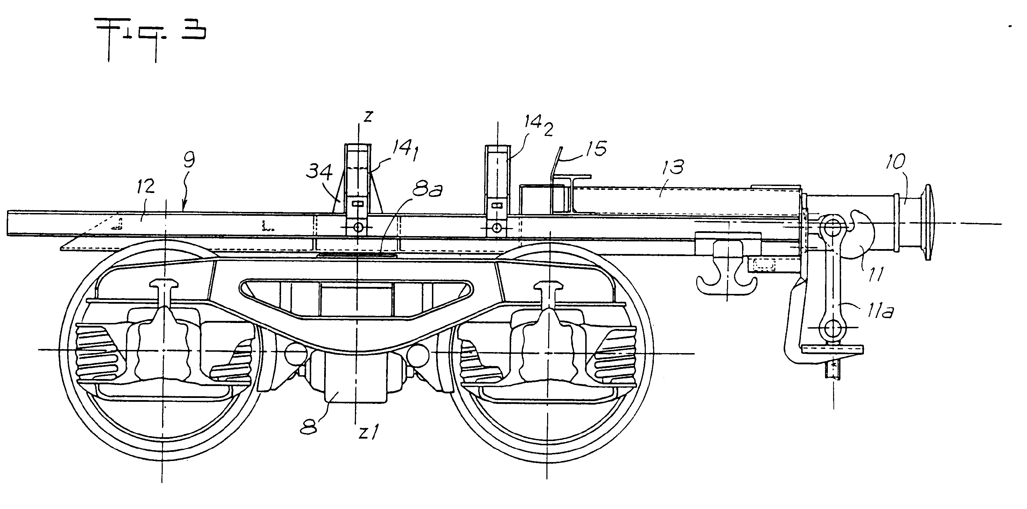

Les figures 1 et 2 représentent schématiquement un véhicule mixte selon l'invention, utilisable soit comme semi-remorque routière (figure 1), soit comme wagon (figure 2).

Ce véhicule comporte un plateau 1 qui peut être une simple plateforme comme cela est représenté sur les figures 1 et 2, mais qui peut évidemment porter également une caisse, un conteneur, une citerne etc...

Le plateau 1 comporte à sa partie avant, un pivot 2 qui permet de l'atteler à un tracteur pour constituer une semi-remorque et deux béquilles hydrauliques ou mécaniques 3, qui supportent la partie avant lorsqu'il est dételé du tracteur. Il comporte à l'arrière un train routier 4 de tout type connu, adapté aux charges à transporter, par exemple un train à trois essieux comme représenté sur la figure 1.

Le train routier 4 est monté sur un châssis auxiliaire 5, qui est relié au châssis du plateau 1 par des bielles articulées 6. Un vérin incliné 7 permet de relever le châssis 5 pour amener le train routier dans la position escamotée sur la figure 2.

La figure 2 représente un véhicule selon l'invention transformé en wagon normal. Cette transformation est réalisée en posant le plateau 1 sur deux boggies ferroviaires $8_1$ et $8_2$, qui sont amovibles. Chaque boggie est équipé d'un châssis intermédiaire $9_1$, $9_2$, qui est fixé sur la crapaudine du boggie et qui porte les équipements spécifiques ferroviaires, notamment les tampons 10, les crochets d'attelage 11, les raccords des dispositifs de freinage etc...

Des véhicules mixtes rail-route tels que ceux qui sont représentés sur les figures 1 et 2 sont déjà connus.

On rappelle qu'ils permettent de transformer un véhicule routier en véhicule ferroviaire, sans aucun transfert de charge et sans avoir à utiliser aucun engin de manutention autre que les béquilles 3 et le vérin 7, simplement en posant le plateau du véhicule sur deux boggies ferroviaires amovibles, qui restent sur la voie ferrée, qui sont engagés sous le plateau du véhicule et qui sont fixés à celui-ci et en escamotant le train routier. Inversement, ils permettent également de transformer un wagon en véhicule routier en retirant les deux boggies amovibles et en redescendant le train routier.

Un des problèmes posés par ce type de véhicule est celui des moyens de centrage du plateau par rapport aux boggies, lesquels moyens doivent permettre d'obtenir et de maintenir un bon centrage sans avoir à exercer des efforts pour déplacer le plateau par rapport aux boggies.

Un autre problème posé est celui des moyens de liaison mécanique entre les châssis intermédiaires $9_1$, $9_2$ et le plateau 1, ces moyens de liaison devant résister à des efforts de traction ou de compression importants lorsque le véhicule est utilisé comme wagon et incorporé dans un train.

Chaque châssis auxiliaire d'un véhicule selon l'invention comporte, de chaque côté, deux dispositifs de guidage latéral $14_1$, $14_2$. Il comporte également

des dispositifs de guidage longitudinal 15. Ces dispositifs en forme de rampes descendant vers l'intérieur, guident la descente du plateau pour le centrer approximativement par rapport aux châssis intermédiaires.

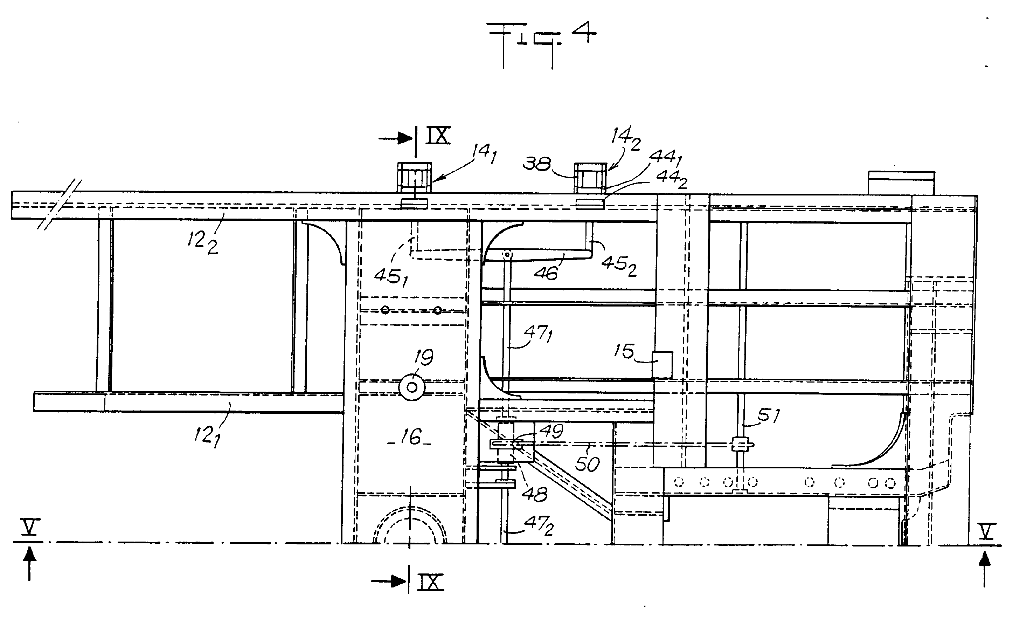

La figure 3 est une vue en élévation à plus grande échelle d'un boggie 8 et du châssis intermédiaire 9 qui lui est associé.

Le boggie 8 est un boggie normalisé par l'Union Internationale des Chemins de Fer.

Il comporte une crapaudine 8a, sur laquelle le châssis intermédiaire 9 est fixé de sorte que le châssis et le boggie peuvent pivoter l'un par rapport à l'autre autour d'un axe vertical z z1.

Le châssis 9 comporte les longerons 12 reliés entre eux par des traverses. Il porte à une de ses extrémités, les organes spécifiques ferroviaires, notamment deux tampons 10 et un crochet d'attelage 11 avec une manille 11a.

Le châssis intermédiaire 9 comporte une partie 13 surélevée au-dessus du plan d'appui du plateau. Cette partie surélevée se trouve dans le prolongement du plateau 1 lorsque celui-ci est appuyé sur les deux boggies.

Il comporte des dispositifs latéraux de guidage transversal, par exemple deux dispositifs $14_1$ et $14_2$, situés de chaque côté du châssis et des dispositifs de guidage longitudinal 15 qui seront décrits en détail ci-après.

La figure 4 est une demi-vue en plan du châssis intermédiaire 9 vue de dessus.

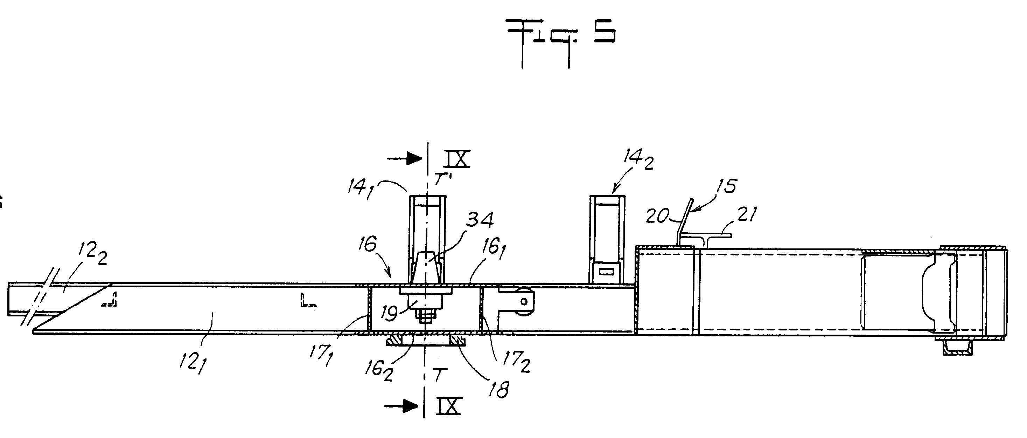

La figure 5 est une coupe verticale selon V-V dela Figure 4.

On voit sur ces figures que le châssis intermédiaire comporte une ossature comportant deux longerons centraux $12_1$ et deux longerons latéraux $12_2$, reliés entre eux par des traverses. L'ossature comporte, notamment, une porte transversale 16 en forme de caisson, composée de deux plaques horizontales transversales $16_1$ et $16_2$, reliées entre elles par deux plats verticaux $17_1$, $17_2$. Le caisson 16 est symétrique par rapport à un plan vertical transversal TT'.

La face supérieure de la plaque supérieure $16_1$ est dans le même plan que les faces supérieures des longerons et des traverses et ce plan sert d'appui pour le plateau 1.

Le caisson 16 porte, au centre de sa face inférieure, une bague 18 qui se fixe sur la crapaudine 8a du boggie.

Il comporte deux pièces cylindriques creuses verticales 19 qui sont fixées entre les deux plaques $16_1$ et $16_2$, symétriquement de part et d'autre du centre du caisson et dont les axes sont dans le plan TT'. Chacune de ces pièces est ouverte vers le haut et prolongée vers le bas par un contre-alésage. Elle est destinées à recevoir une broche de centrage cylindroconique.

Aux deux extrémités du caisson transversal 16 se trouvent deux organes de guidage transversal $14_1$. Les deux autres organes de guidage transversal $14_2$ sont situés entre le caisson transversal 16 et l'extrémité du châssis qui porte les organes d'attelage du wagon.

On voit sur les figures 4 et 5 un des deux organes de guidage longitudinal 15, le deuxième organe étant symétrique par rapport au plan longitudinal médian.

On voit sur la figure 5 que les organes 15 comportent une plaque pliée 20 qui est soudée à l'avant d'une traverse 21 et qui forme une rampe inclinée en descendant vers l'extrémité du châssis auxiliaire qui est opposée à celle qui porte les tampons et les dispositifs d'attelage ferroviaire, c'est-à-dire inclinée vers l'avant pour le châssis placé à l'arrière du plateau et inclinée vers l'arrière pour le châssis placé en avant du plateau.

On voit sur la figure 5 que les dispositifs de guidage latéral $14_1$, $14_2$ et de guidage longitudinal 15 s'étendent au-dessus du plan d'appui du plateau sur le châssis auxiliaire constitué par la face supérieure de la plaque $16_1$.

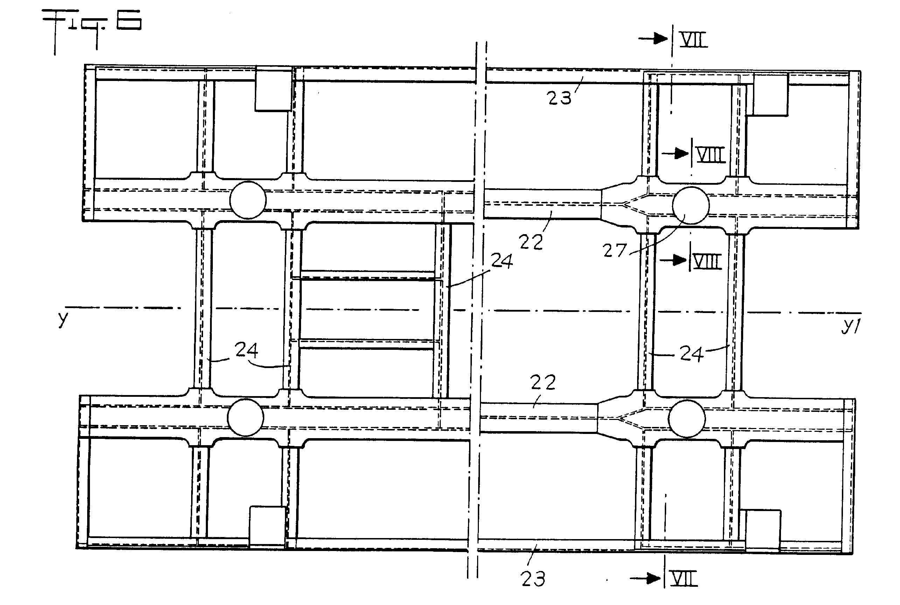

La figure 6 est une vue en plan des deux extrémités du plateau 1. Le plateau comporte une ossature symétrique par rapport à un plan vertical longitudinal pasant par l'axe y $y1$. Cette ossature comporte, dans la partie centrale du plateau, deux longerons principaux 22 et deux longerons latéraux 23 reliés entre eux par des entretoises 24 en forme de I.P.N.

Les deux longerons principaux ont une section en forme de I dans leur partie centrale. Aux deux extrémités du plateau, ils sont prolongés par deux poutres en forme de caisson comportant deux plaques horizontales épaisses 25a et 25b reliées entre elles par deux plaques verticales 26, comme on le voit sur la figure 7, qui est une coupe transversale selon VII-VII de la figure 6. Chacun des caissons porte un cylindre vertical 27, dans lequel est logé un fourreau conique femelle divergeant vers le bas.

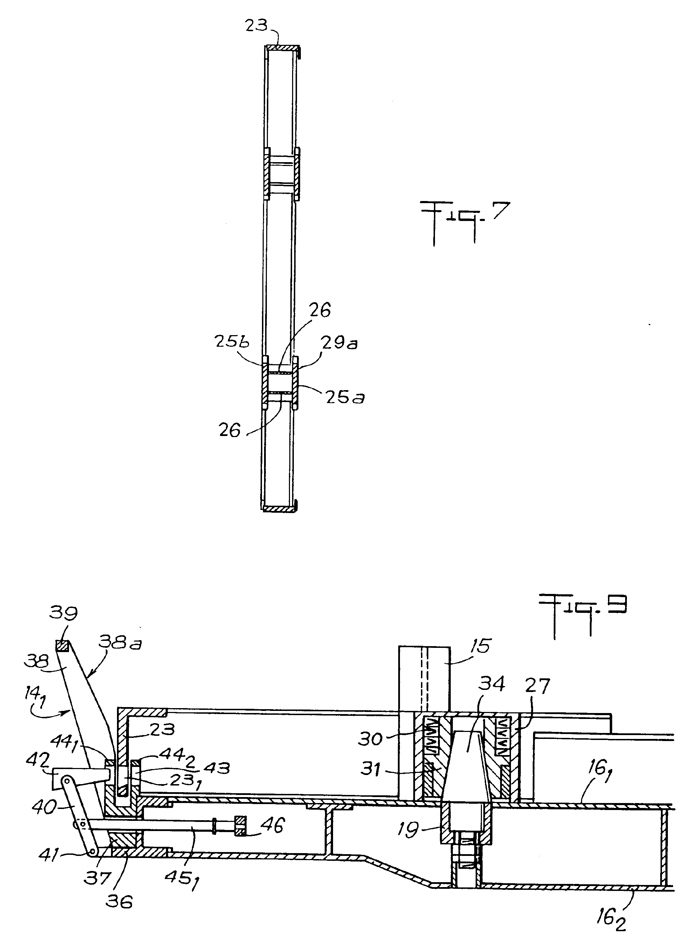

La figure 8 est une coupe à grande échelle selon VIII-VIII de la figure 6 représentant une partie du plateau 1, posé sur la plaque $16_1$ du châssis intermédiaire.

On voit sur la figure 8 un cylindre 27 qui est soudé sur les deux plaques 25a et 25b et sur les deux plats 26 qui se trouvent en dehors du plan de coupe VIII-VIII.

L'extrémité supérieure du cylindre 27 est fermée par un plaque soudée 29. Le cylindre 27 contient un ressort ou des rondelles élastiques 30 ou tout autre organe élastique équivalent, par exemple une bague ou un tampon en un matériau élastomère. Il contient, en outre, un fourreau à axe vertical 31 qui délimite une cavité femelle cylindroconique et qui est maintenu centré dans le cylindre 27 par une bague 32, de sorte qu'il peut coulisser librement dans le cylindre 27. Le fourreau 31 et la bague 32 sont maintenus en place dans le cylindre par des vis 33. L'extrémité inférieure du cylindre 27 est dans le plan de la face inférieure de la plaque inférieure 25b.

La figure 8 représente, en outre, une coupe de la partie supérieure d'une des deux pièces creuses 19 du châssis intermédiaire. On voit que cette pièce contient une broche verticale conique 34 qui est fixée par un écrou 35, qui converge vers le haut et qui pénètre dans la cavité femelle du fourreau 31.

Les deux broches coniques 34 portées par chaque châssis intermédiaire $9_1$, $9_2$ pénètrent dans les cavités femelles des fourreaux 31 lorsqu'on descend le plateau sur les boggies et grâce à leur conicité elles permettent de rattraper des écarts de quelques centimètres pour centrer parfaitement le plateau et les boggies l'un par rapport à l'autre, dans le sens transversal et longitudinal après qu'un centrage approximatif a été déjà obtenu par les rampes inclinées 14 et 15 portées par le châssis intermédiaire.

Le poids du plateau et de sa charge s'exerce pendant la descente du plateau sur l'organe élastique 30. Celui-ci est calibré de telle sorte qu'il se déforme suffisamment pour que la face inférieure des plaques 25b vienne directement en contact avec la face supérieure des plaques $16_1$ du châssis intermédiaire, de sorte que les broches 34 n'ont pas à supporter des efforts verticaux importants.

Toutefois, les broches 34 servent à assurer la liaison mécanique entre le plateau et les châssis intermédiaires qui portent les dispositifs d'attelage et ces broches sont dimensionnées pour supporter des efforts horizontaux importants.

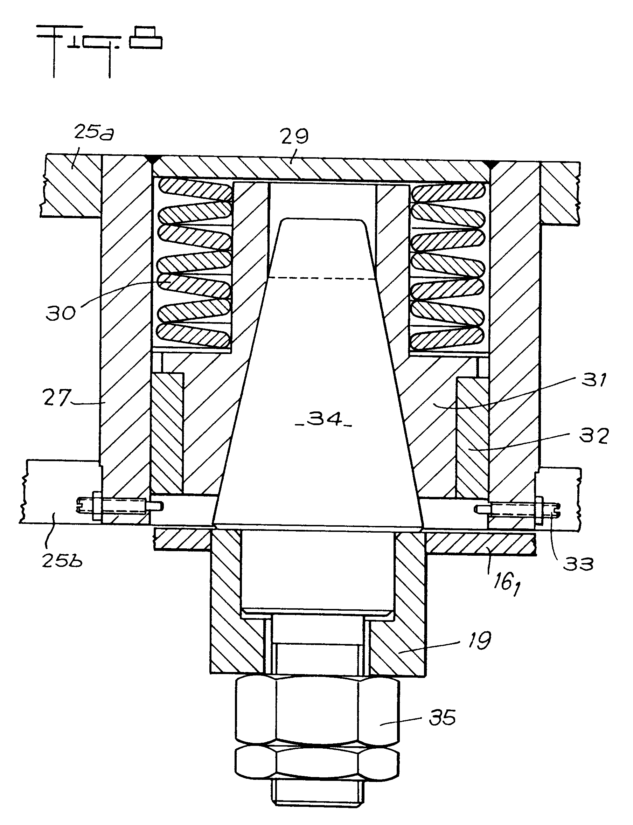

La figure 9 est une coupe selon IX-IX des figures 4 et 5.

On voit de face sur cette figure un des guidages longitudinal 15. On voit également un coupe verticale de l'un des guidages transversaux $14_1$ associé à un verrou de blocage du plateau sur le châssis intermédiaire.

On voit sur la figure 9 un longeron latéral 36 du châssis intermédiaire à l'extérieur duquel est fixé une pièce mécanique 37 comportant deux plats parallèles 38 reliés par une entretoise 39. Les deux plats 38 ont une face interne inclinée 38a, de sorte qu'ils forment des rampes descendant vers l'intérieur le long desquelles glissent les longerons latéraux 23 du plateau.

Les dispositifs de guidage 15, $14_1$ et $14_2$ ont pour effet de procurer un centrage approximatif du plateau qui amène les broches coniques 34 sensiblement en regard des fourreaux 31 portés par le plateau lorsque le plateau est descendu sur les boggies.

La pièce mécanique 37 porte une bielle 40 qui pivote autour d'une articulation 41. La bielle 40 porte à son extrémité une clavette en forme de coin 42 qui s'engage à travers deux ouvertures 43, qui sont découpées dans deux plats $44_1$ et $44_2$ entre lesquels vient se positionner l'âme verticale du profilé 23 du plateau dont l'âme horizontale inférieure est grugée.

Le profilé 23 comporte également une ouverture $23_1$ qui vient se positionner dans l'alignement des deux ouvertures 43. L'ouverture $23_1$ a un bord inférieur taillé en biseau, dont l'angle correspond à celui de la clavette conique 42, de sorte que lorsque la clavette est engagée à travers les deux ouvertures 43 et l'ouverture $23_1$, son bord supérieur s'appuie contre les deux plats $44_1$ et $44_2$ et son bord inférieur s'appuie contre le biseau incliné taillé dans le profilé 23, lequel se trouve alors verrouillé avec le châssis intermédiaire.

On voit sur la figure 9 que la bielle 40 est reliée à une tringle $45_1$ qui fait partie d'une transmission de mouvement par tringles et leviers, qui est représentée en partie sur la figure 4. On voit sur cette figure les deux tringles $45_1$ et $45_2$ qui sont connectées à un levier 46 qui est lui-même connecté à une tige de manoeuvre $47_1$.

On voit une deuxième tige de manoeuvre $47_2$ qui est connectée à un deuxième levier non représenté, qui est symétrique par rapport au plan médian longitudinal et qui commande deux tiges de manoeuvre des deux clavettes équipant les deux verrous latéraux situés de l'autre côté du châssis intermédiaire.

Les deux tiges $47_1$, $47_2$ portent, à leurs extrémités en regard, des filetages de sens inverse qui sont vissés dans un écrou 48, solidaire d'une roue dentée 49 qui est manoeuvrée par une transmission à chaîne sans fin 50 au moyen d'une tige de manoeuvre 51 aboutissant à un volant de manoeuvre non représenté qui permet de verrouiller ou de déverrouiller simultanément les quatre clavettes 42 des quatre verrous latéraux.

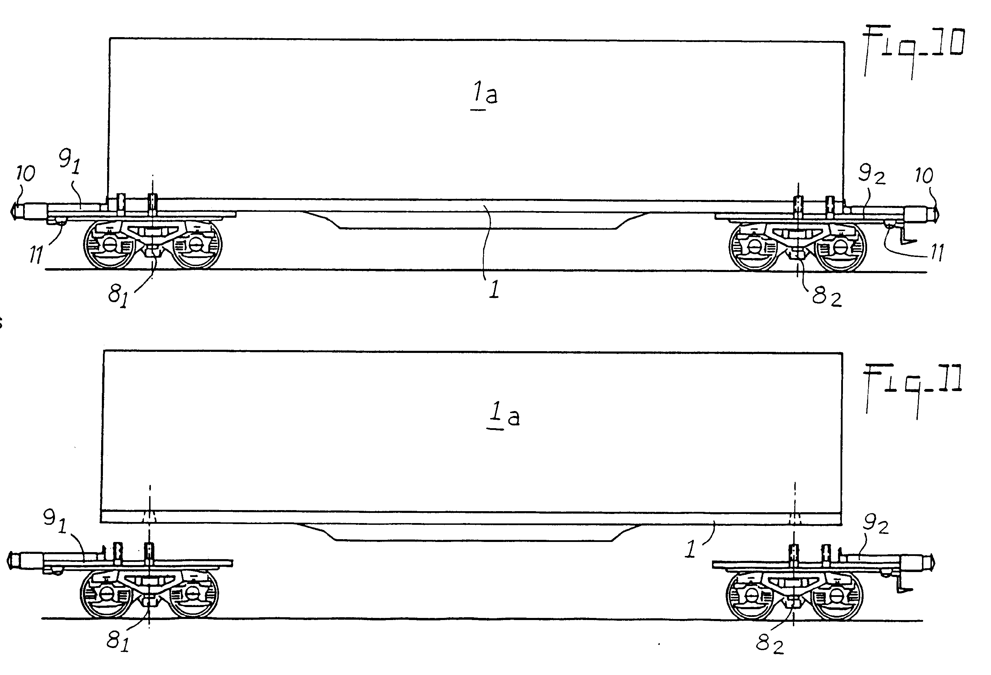

Les figures 10 et 11 représentent un dispositif selon l'invention qui comporte un plateau 1 portant par exemple une caisse 1a délimitant un volume fermé. Il est précisé que cet exemple n'est pas limitatif et que le plateau 1 peut être nu ou porter d'autres équipements tels qu'une citerne ou des trémies ou des ridelles.

La figure 10 représente le dispositif transformé en wagon normal. Cette transformation est obtenue en posant et en fixant le plateau 1 sur deux boggies ferroviaires $8_1$, $8_2$ qui sont équipés chacun d'un châssis intermédiaire $9_1$, $9_2$ portant des tampons 10 et des organes d'attelage 11. Les boggies, les châssis intermédiaires et le plateau sont identiques à ceux qui sont représentées sur les figures 3 à 8 et les parties homologues sont représentées par les mêmes repères.

Le dispositif représenté sur la figure 10 diffère de celui qui est représenté sur la figure 2 par le fait qu'il ne comporte pas de train routier relevable, ni de béquille ni de pivot d'attelage à un tracteur routier ce qui à l'avantage de réduire le poids mort du dispositif.

La figure 11 représente le dispositif selon la figure 10 après que le plateau 1 a été séparé des deux boggies ferroviaires. Cette opération nécessite l'utilisation d'une grue ou d'un engin de levage pour soulever le plateau 1, et les marchandises contenues dans la caisse 1a. On obtient ainsi, sans avoir à transborder les marchandises contenues dans la caisse 1a, un dispositif de transport de marchandises multimode qui constitue un conteneur transportable par bateau, par avion, par véhicule terrestre ou même en le posant sur des wagons plateforme.

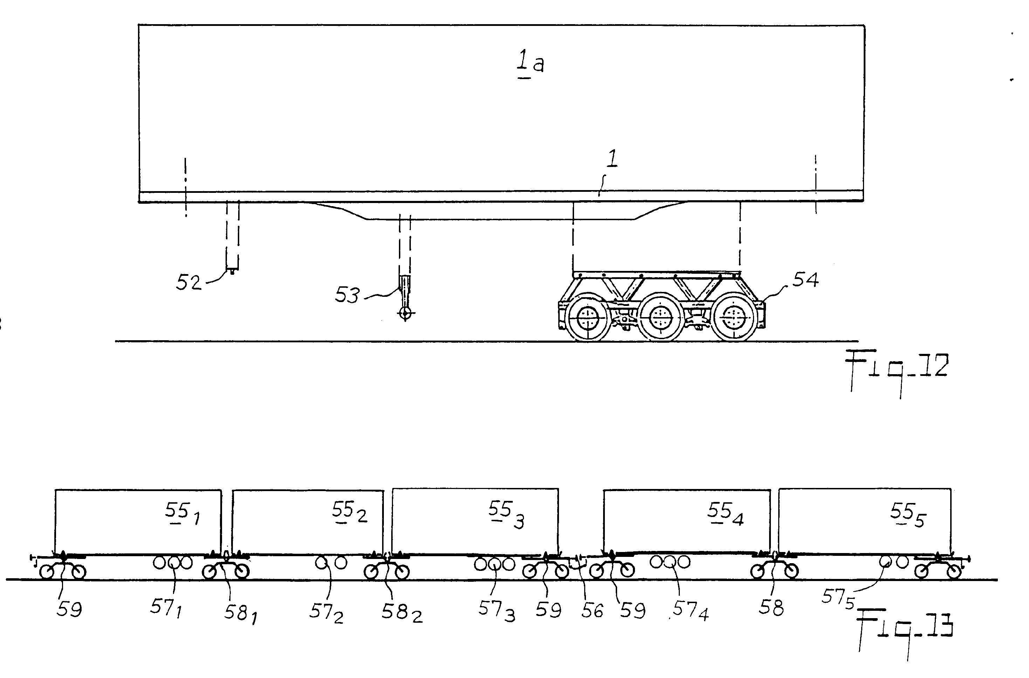

La figure 12 représente une autre transformation possible d'un dispositif selon la figure 1. Une fois séparé des deux boggies ferroviaires, le plateau 1 est posé, au moyen d'un engin de manutention, puis fixé sur un train routier amovible 54 et il est équipé de deux béquilles 53 hydrauliques ou mécaniques et d'un pivot 52 d'attelage à une tracteur routier ce qui permet de le transformer en semi-remorque routière.

Selon une autre variante non représentée chaque extrémité du plateau 1 peut être posée et fixée sur un train routier amovible et le plateau est équipé d'un timon de sorte que l'on obtient une remorque routière.

La figure 13 est une vue schématique d'une partie de train comportant une première rame de 3 wagons $55_1$, $55_2$, $55_3$ articulés entre eux et une deuxième rame de deux wagons $55_4$, $55_5$ articulés entre eux, les deux rames étant reliées entre elles par un attelage normal 56. Bien entendu, le nombre de wagons articulés composant chaque rame et le nombre de rames peuvent être quelconques.

La figure 13 représente un mode de réalisation dans lequel chaque wagon comporte un train routier relevable $57_1$, $57_2$, $57_3$, $57_4$, $57_5$ de sorte qu'il est transformable en semi-remorque routière. Cet exemple n'est pas limitatif et chaque wagon peut comporter un plateau sans train routier relevable et être transformable en conteneur multimode ou en véhicule routier par adjonction d'un ou de deux trains routiers amovibles.

L'originalité des dispositifs de transport représentés sur la figure 13 réside dans le fait qu'ils sont transformables en wagons articulés entre eux grâce à des boggies ferroviaires spéciaux 58 qui sont placés entre deux wagons successifs et qui sont communs à ces deux wagons.

On voit sur la figure 13 que les deux extrémités d'un plateau, par exemple le plateau du wagon $55_2$, peuvent être posées sur deux boggies communs $58_1$ et $58_2$. On voit également que l'on obtient des wagons de tête ou de queue de rame tels que les wagons $55_1$, $55_3$, $55_4$, $55_5$ en posant une extrémité d'un plateau sur un boggie 58 commun à deux wagons et l'autre extrémité sur un boggie normal 59 qui est équipé d'un châssis intermédiaire portant des organes d'attelage 56 permettant d'atteler le wagon à une autre rame ou à un wagon normal.

On peut également poser les deux extrémités du plateau sur deux boggies normaux 59 pour obtenir un wagon traditionnel.

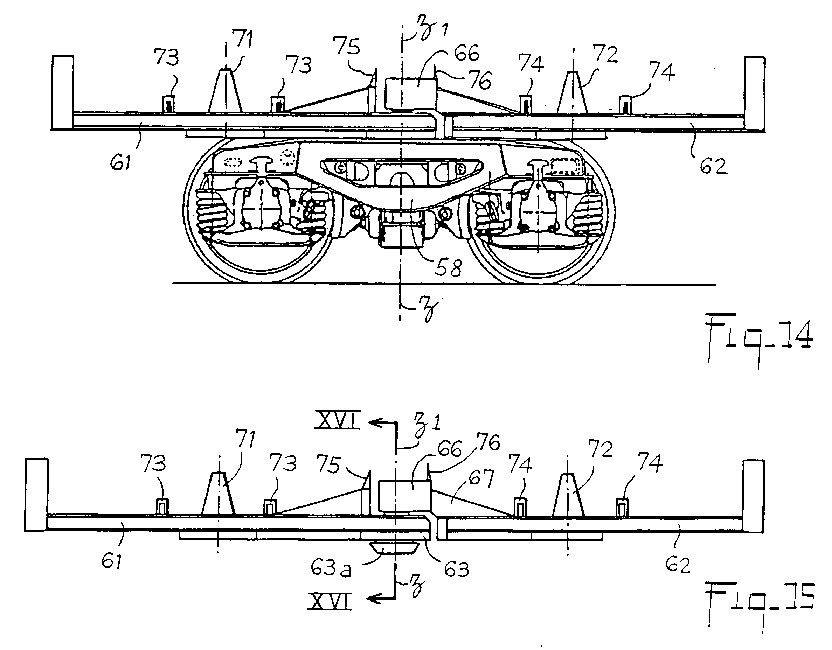

La figure 14 est une vue en élévation d'un boggie 58 commun à deux wagons successifs. La partie inférieure du boggie est conforme aux normes ferroviaires internationales.

Elle comporte deux essieux munis de roues ferroviaires et une crapandine ou pivot central articulé autour d'un axe vertical zz1.

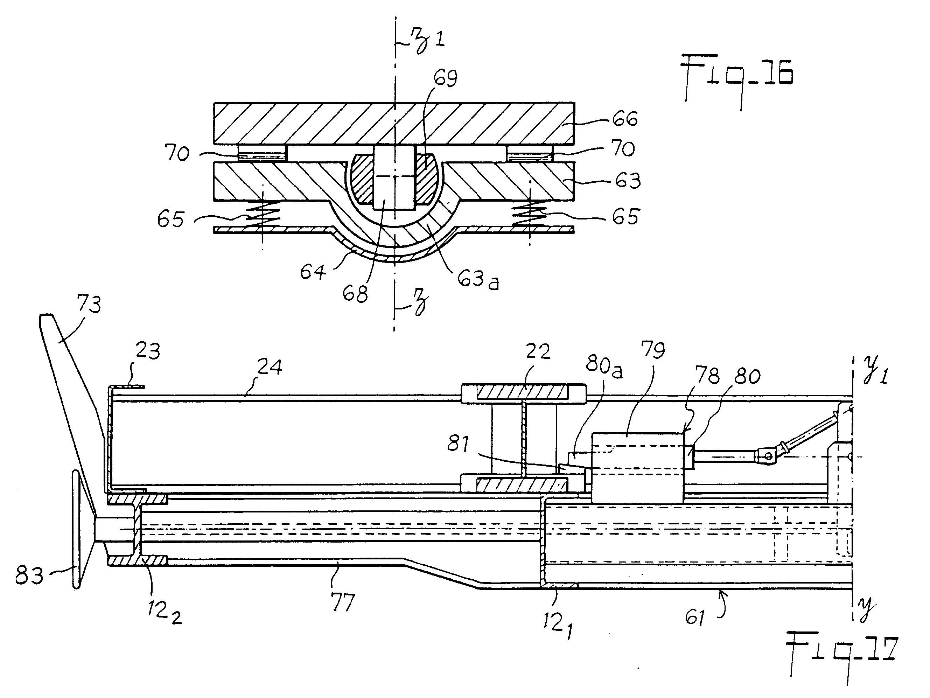

Le boggie 58 comporte deux châssis intermédiaires 61 et 62 qui sont articulés entre eux autour d'un axe vertical zz1 confondu avec l'axe du pivot du boggie. La figure 15 est une vue en élévation des deux châssis intermédiaires 61 et 62 assemblés et la figure 16 est une coupe transversale de la figure 15 passant par l'axe de pivotement zz1.

L'un des châssis intermédiaires, par exemple le châssis avant 61 comporte, à son extrémité arrière, une traverse 63 qui s'étend sur toute la largeur du châssis.

La traverse 63 porte, en son centre, une rotule spérique creuse 63a qui repose dans une cuvette sphérique 64 qui fait partie de la crapandine du boggie 58.

Des ressorts 65 sont fixés aux extrémités de la traverse 63 et prennent appui sur le boggie 58 pour limiter l'inclinaison transversale du châssis intermédiaire 61. Grâce à la rotule spérique le châssis intermédiaire 61 peut pivoter librement par rapport au boggie, seule l'inclinaison latérale étant limitée par les ressorts 65.

Le deuxième châssis intermédiaire 62, qui est par exemple le châssis arrière, comporte, à l'extrémité avant, une traverse 66 qui s'étend sur toute la largeur du châssis et qui est situé au-dessus de la face supérieure dudit châssis à laquelle elle est reliée par des goussets 67. La traverse 66 porte en son centre un bout d'arbre vertical d'axe zz1 à l'extrémité duquel est montée une portion de rotule 69 ayant la forme d'une couronne sphérique, qui est engagée dans la rotule creuse 63a du premier châssis 61.

La traverse 66 porte à ses deux extrémités, deux butées 70 qui prennent appui sur la traverse 63 du premier châssis. La partie inférieure des butées 70 présente la forme d'un demi-cylindre à axe transversal de sorte que le deuxième châssis peut pivoter par rapport au premier châssis à la fois autour de l'axe vertical zz1 grâce à la rotule 69 et autour d'un axe horizontal transversal constitué par la génératrice d'appui des deux butées demi-cylindriques 70.

On voit sur les figures 14 et 15 que chacun des chhâssis intermédiaires 61, 62 comporte deux paires de broches coniques verticales 71, 72, chaque paire comportant deux broches situées dans un même plan transversal.

Chaque paire de broches coniques coopère avec une paire de fourreaux cylindro-coniques situés sous le plateau de l'un des dispositifs selon l'invention.

Chaque châssis intermédiaire comporte respectivement, sur chacun de ses bords latéraux, une paire de rampes 73 et une paire de rampes 74 qui sont inclinées vers l'intérieur en descendant et qui servent au guidage transversal d'un plateau pendant qu'il descend sur le châssis intermédiaire.

Enfin, chaque châssis intermédiaire comporte au voisinage de ses extrémités des rampes 75, 76 de guidage longitudinal.

Les paires de broches coniques 71, 72, les fourreaux cylindro-coniques du plateau, les rampes de guidage latéral 73, 74 et les rampes de guidage longitudinal 75, 76 sont identiques à ceux qui sont décrits en référence aux figures 3 à 8 et remplissent les mêmes fonctions. La seule différence réside dans le fait que les boggies communs comportent deux châssis intermédiaires qui sont articulés entre eux tandis que les boggies normaux comportent un seul châssis intermédiaire.

Les plateaux selon l'invention peuvent être posés indifféremment sur deux boggies normaux ou sur deux boggies communs ou sur un boggie normal et sur un boggie commun ce qui confère une grande souplesse dans la composition des trains et le triage des wagons. Il suffit que les gares de triage soient équipées de boggies normaux et de boggies communs et l'on peut alors extraire un wagon d'une rame de wagons articulés, remplacer les boggies communs par des boggies normaux et incorporer le wagon dans un train traditionnel. Inversement, on peut extraire un wagon d'un train traditionnel, l'équiper d'un ou de deux boggies communs et l'intercaler dans une rame de wagon articulés.

Les châssis intermédiaires des boggies communs comportent également des dispositifs de verrouillage d'un plateau avec chacun desdits châssis intermédiaires. Ces dispositifs ne sont pas représentés sur les figures 14 et 15.

La figure 17 représente un autre mode de réalisation d'un dispositif de verrouillage d'un plateau avec un châssis intermédiaire qui remplit la même fonction que le dispositif représenté sur la figure 9. La figure 17 est une demi-coupe transversale sur laquelle on voit un longeron principal $12_1$ et un longeron latéral $12_2$ d'un châssis intermédiaire 61 qui sont reliés entre eux par des traverses 77. Le longeron latéral $12_2$ porte une paire de rampes de guidage latéral 73.

On voit également sur la figure 17 un longeron central 22 ayant une section en forme de I et un longeron latéral 23 du plateau du véhicule qui sont reliés entre eux par des traverses 24.

Le châssis intermédiaire 56 comporte deux paires de verrous 78 qui sont disposés symétriquement par rapport au plan médian longitudinal $yy_1$. Chaque verrou 78 comporte un boîtier 79 qui est fixé au châssis, dans lequel peut se déplacer latéralement un coulisseau 80 qui est prolongé par un pêne en forme de coin 80a qui sort dudit boîtier.

Le longeron principal 22 du plateau porte des rampes inclinées 81 et chaque pêne vient s'appuyer contre une des rampes inclinées ce qui a pour effet de rendre le plateau solidaire du châssis intermédiaire dans le sens vertical.

Les quatre coulisseaux 80 sont manoeuvrés par un système de tiges de transmission de mouvement 82 et de leviers qui sont déplacés simultanément par un volant 83.

## Revendications

1. Dispositif de transport de marchandises, transformable en wagon, comportant un plateau (1) qui comporte des longerons principaux (22) et deux longerons latéraux (23), qui peut être posé sur deux boggies ferroviaires amovibles ($8_1$, $8_2$) équipés chacun d'un châssis ($9_1$, $9_2$) qui porte des moyens de centrage fixation dudit plateau caractérisé en ce que chaque châssis ($9_1$, $9_2$) est un châssis intermédiaire et comporte une paire de broches (34) verticales coniques qui convergent vers le haut et qui s'étendent au-dessus de la face supérieure dudit châssis intermédiaire servant de plan d'appui dudit plateau et ledit plateau comporte, à proximité de chacune de ses deux extrémités, une paire de fourreaux creux cylindro-coniques (31) et verticaux qui divergent vers le bas et qui sont destinés à recevoir chacun une desdites broches coniques, chacun de cesdits fourreaux (31) étant relié audit plateau (1) par l'intermédiaire d'un organe élastique (30) dont les dimensions et la raideur sont calculées pour que la charge du plateau (1) l'écrase suffisamment pour que le plateau s'appuie directement sur la face supérieure ($16_2$) d'un châssis intermédiaire (9) lorsque les broches coniques (34) portées par ledit châssis intermédiaire sont engagées dans lesdits fourreaux creux (31).

2. Dispositif selon la revendication 1 caractérisé en ce que lesdits longerons principaux (22) dudit plateau sont prolongés, à leurs deux extrémités, par des poutres en forme de caissons (25a, 25b, 26) et chacun desdits fourreaux creux cylindro-coniques (31) est placé à l'intérieur d'un cylindre vertical (27) qui est fixé à l'intérieur de l'une desdits poutres caisson et est centré dans ledit cylindre vertical (27) par une bague (32).

3. Dispositif selon l'une quelconque des revendications 1 à 2 caractérisé en ce que chacun desdits châssis intermédiaires ($9_1$, $9_2$) comporte deux longerons latéraux (36), et deux paires de rampes de guidage latéral qui sont fixés respectivement sur chacun desdits longerons latéraux, qui sont inclinées vers l'intérieur en descendant et qui s'étendent au-dessus de la face supérieure ($16_1$) dudit châssis intermédiaire, lesquelles rampes sont destinées à guider latéralement et à centrer le plateau pendant qu'il est posé sur ledit châssis intermédiaire ($9_1$, $9_2$).

4. Dispositif selon la revendication 1 caractérisé en ce que chaque châssis intermédiaire porte deux paires de verrous de blocage chaque verrou comportant deux plats parallèles ($44_1$, $44_2$) comportant des ouvertures (43) entre lesquels plats s'engage l'un desdits longerons latéraux (23) dudit plateau et comporte en outre, une clavette en forme de coin (42) qui s'engage dans lesdites ouvertures (43) et dans ledit longeron latéral (23).

5. Dispositif selon la revendication 4 caractérisé en ce que lesdites clavettes en forme de coin (42) sont articulées chacune sur un levier (40) qui est relié audit châssis intermédiaire par une articulation (41) et lesdits leviers (40) sont reliés par des tringles ($45_1$) à un dispositif de transmission de mouvement par tringles et leviers ($45_1$, $45_2$, 46, $47_1$, $47_2$) qui permet de manoeuvrer simultanément les quatre verrous d'un même châssis.

6. Dispositif selon la revendication 1 caractérisé en ce que chaque châssis intermédiaire comporte deux paires de verrous de blocage (73), chaque verrou comportant un coulisseau transversal (75) prolongé par un pène (75a) en forme de coin qui coopère avec une rampe inclinée (76) qui est fixée sur l'un desdits longerons principaux (22) dudit plateau et les quatre coulisseaux (75) sont manoeuvrés simultanément par un système de transmission de mouvement (77) commandé par un volant (78).

7. Dispositif selon la revendication 1 comportant des boggies ferroviaires communs à deux plateaux successifs qui permettent de former des wagons articulés entre eux caractérisé en ce que chacun desdits boggies (55) commun à deux plateaux, comporte deux châssis intermédiaires (56, 57) qui sont articulés entre eux autour d'un axe vertical ($zz_1$) confondu avec l'axe du pivot dudit boggie (55) et chacun des châssis intermédiaires (56, 57) porte une paire de broches verticales, coniques (66, 67) qui s'engagent dans une paire de fourreaux cylindro-coniques portés par chacun desdits plateaux.

8. Dispositif selon la revendication 7 caractérisé en ce que l'un desdits châssis intermédiaires (56) comporte, à l'une de ses extrémités, une première traverse (58) qui porte en son centre une rotule sphérique creuse (58a) qui repose dans une cuvette sphérique (59) portée par ledit boggie commun et le deuxième châssis intermédiaire (57) comporte, à l'une de ses extrémités, une deuxième traverse (61) qui est placée au-dessus de la face supérieure dudit deuxième chassis intermédiaire, laquelle deuxième traverse (61) porte, en son centre, une position de rotule sphérique (64) qui est engagée dans ladite rotule sphérique creuse (58a) et porte, à ses deux extrémités, deux butées (65) qui prennent appui sur ladite première traverse par une surface cylindrique à axe transversal qui forme une articulation transversale.

**Patentansprüche**

1. In einen Waggon umformbare Vorrichtung zur Güterbeförderung, bestehend aus einer Plattform (1) mit Hauptlängsträgern (22) und zwei seitlichen Längsträgern (23), die auf zwei lösbare Eisenbahnfahrgestelle ($8_1$, $8_2$) auflegbar ist, die jeweils mit einem Rahmen ($9_1$, $9_2$) versehen sind, der Einrichtungen zur Zentrierung und Befestigung der Plattform trägt, dadurch gekennzeichnet, daß -jeder Rahmen ($9_1$, $9_2$) ein Zwischenrahmen ist und ein Paar von vertikalen konischen Zapfen (34) aufweist, die nach oben konvergieren und sich über der oberen Fläche des Zwischenrahmens erstrecken, der als Auflagefläche für die Plattform dient, und daß die Plattform in Nähe jedes ihrer beiden Enden ein Paar von hohlen, vertikalen konisch-zylindrischen Buchsen (31) aufweist, die nach unten divergieren und jeweils zur Aufnahme eines der konischen Zapfen bestimmt sind und deren jede mit der Plattform (1) über ein elastisches Organ (30) verbunden ist, dessen Abmessungen und Steifheit so bemessen sind, daß die Last der Plattform (1) sie so weit zusammendrückt, daß die Plattform direkt auf der oberen Fläche ($16_1$) eines Zwischenrahmens (9) aufliegt, wenn die von diesem Zwischenrahmen getragenen konischen Zapfen (34) in die hohlen Buchsen (31) eingeführt sind.

2. Vorrichtung nach Anspruch 1, dadurch gekennzeichnet, daß die Hauptlängsträger (22) der Plattform an ihren beiden Enden durch kastenförmige Träger (25a, 25b, 26) verlängert sind und jede hohle konisch-zylindrische Buchse (31) im Inneren eines vertikalen zylinders (27) angeordnet ist, der im Inneren eines der Kastenträger befestigt ist, und in dem vertikalen zylinder (27) durch einen Ring (32) zentriert ist.

3. Vorrichtung nach einem dar Ansprüche 1 bis 2, dadurch gekennzeichnet, daß jeder Zwischenrahmen ($9_1$, $9_2$) zwei seitliche Längsträger (36) und zwei jeweils an einem der seitlichen Längsträger befestigte Paare von Rampen ($14_1$-$14_2$) zur seitlichen Führung aufweist, die nach unten und innen geneigt sind, sich über der oberen Fläche ($16_1$) des Zwischenrahmens erstrecken und zur seitlichen Führung und zur Zentrierung der Plattform bestimmt sind, während sie auf den Zwischenrahmen ($9_1$, $9_2$) aufgelegt wird.

4. Vorrichtung nach Anspruch 1, dadurch gekennzeichnet, daß jeder Zwischenrahmen zwei Paare von Blockierungsriegeln trägt, deren jeder zwei parallele Platten ($44_1$, $44_2$) aufweist, die Öffnungen (43) besitzen und zwischen die einer der seitlichen Längsträger (23) der Plattform eintritt, und außerdem einen keilförmigen Verriegelungsbolzen (42) besitzt, der in die Öffnungen (43) und in den seitlichen Längsträger (23) eintritt.

5. Vorrichtung nach Anspruch 4, dadurch gekennzeichnet, daß die keilförmigen Verriegelungsbolzen jeweils an einem Hebel (40) angelenkt sind, der mit dem Zwischenrahmen durch ein Gelenk (41) verbunden ist, und daß die Hebel (40) durch Stangen ($45_1$) mit einer aus Stangen und Hebeln ($45_1$, $45_2$, 46, $47_1$, $47_2$) bestehenden Bewegungsübertragungsvorrichtung verbunden sind, die die gleichzeitige Betätigung der vier Riegel ein und desselben Rahmens gestattet.

6. Vorrichtung nach Anspruch 1, dadurch gekennzeichnet, daß jeder Zwischenrahmen zwei Paare von Blockierungsriegeln (78) besitzt, deren jeder einen Querschieber (80) aufweist, der durch eine keilförmige Klinke (80a) verlängert ist, die mit einer an einem der Hauptlängsträger (22) befestigten schrägfläche (81) zusammenwirkt, und daß die vier Schieber (80) durch ein durch ein Rad (83) gesteuertes Bewegungsübertragungssystem gleichzeitig betätigt sind.

7. Vorrichtung nach Anspruch 1 mit Eisenbahnfahrgestellen, die zwei aufeinanderfolgenden Plattformen gemeinsam sind und die Bildung von aneinander angelenkten Waggons gestatten, dadurch gekennzeichnet, daß jedes der zwei Plattformen gemeinsamen Fahrgestelle (58) zwei zwischenrahmen (61, 62) aufweist, die aneinander um eine vertikale achse ($zz_1$), die mit der Drehachse des Fahrgestells zusammenfällt, angelenkt sind und deren jeder ein Paar von vertikalen konischen zapfen (71, 72) trägt, die in ein Paar von konisch-zylindrischen Buchsen eintreten, die von jeder der Plattformen getragen sind.

8. Vorrichtung nach Anspruch 7, dadurch gekennzeichnet, daß einer der Zwischenrahmen (61) an einem seiner Enden einen ersten Querträger (63) besitzt, der in seiner mitte ein hohles Kugelgelenkelement (63a) trägt, das in einer von dem gemeinsamen Fahrgestell getragenen, kugelförmigen Schale (64) aufliegt, und daß der zweite Zwischenrahmen (62) an einem seiner Enden einen zweiten Querträger (66) besitzt, der über der oberen Fläche des zweiten zwischenrahmens angeordnet ist, in seiner Mitte ein Kugelgelenkelement (69) trägt, das in das hohle Kugelgelenkelement (63a) eintritt, und an seinen beiden Enden zwei Anschläge (70) trägt, die auf dem eisten Querträger auf einer zylindrischen Fläche mit ein Quergelenk bildender Querachse aufliegen.

**Claims**

1. A goods transport apparatus capable of being transformed into a railway wagon, comprising a deck (1) including main longitudinal beams (22) and two side beams (23) capable of being placed on two removable rail bogies ($8_1$, $8_2$) each of which is provided with a chassis ($9_1$, $9_2$) carrying centering and fixing means for said deck, characterised in that each chassis ($9_1$, $9_2$) is an intermediate chassis and includes a pair of upwardly tapering conical vertical pegs (34) extending above the upper surface of said intermediate chassis serving as a bearing surface for said deck, and said deck includes, in the vicinity of each of its two ends, a pair of vertical hollow cylindro-conical bushes (31) which flare downwardly and which are intended to receive each one of said conical pegs, each of said bushes (31) being connected to said deck (1) by means of resilient member (30) whose dimensions and whose stiffness are designed so that the load of the deck (1) compresses said resilient member sufficiently for the deck to bear directly against the upper surface ($16_1$) of an intermediate chassis (9) when the control pegs (34) carried by said intermediate chassis are engaged in said hollow bushes (31).

2. An apparatus according to Claim 1, characterised in that said main longitudinal beams (22) of said deck are extended, at each of their two ends, by box-section girders (25a,25b,26) with each of said cylindro-conical hollow bushes (31) being disposed inside a vertical cylinder (27) which is fixed inside one of said box girders and is centered in said vertical cylinder (27) by a ring (32).

3. An apparatus according to either Claim 1 or Claim 2, characterised in that each of said intermediate chassis ($9_1,9_2$) includes two side beams (36) and two pairs of internal guide ramps ($14_1$-$14_2$) which are respectively fixed on each of said side beams, which are inclined inwardly and downwardly, and which extend above the upper surface ($16_1$) of said intermediate chassis, said ramps being intended to provide lateral guidance and to center the deck while it is being placed on said intermediate chassis ($9_1,9_2$).

4. An apparatus according to Claim 1, characterised in that each intermediate chassis carries two pairs of locking bolts, each bolt including two parallel flats ($44_1,44_2$) having openings (43), one of said side beams (23) of said deck engaging between said flats, and also includes a wedge-shaped key member (42) which engages in said openings (43) and in said side beam (23).

5. An apparatus according to Claim 4, characterised in that each of said wedge-shaped key members (42) is hinged to a lever (40) which is connected to said intermediate chassis by a hinge (41), said levers (40) being connected by rods ($45_1$) to a linkage ($45_1,45_2,46,47_1,47_2$) enabling all four bolts on a given chassis to be operated simultaneously.

6. An apparatus according to Claim 1, characterised in that each intermediate chassis includes two pairs of locking bolts (78), each bolt including a transverse slide (80) which is extended by a wedge-shaped bolt (80a) which co-operates with an inclined ramp (81) fixed to one of said main longitudinal beams (22) of said deck, and the four slides (80) are operated simultaneously by means of a motion transmission system controlled by a handwheel (83).

7. An apparatus according to Claim 1, including rail bogies which are common to two successive decks enabling articulation of railway wagons characterised in that each of said bogies (58) common to two decks includes two intermediate chassis (61,62) which are articulated to each other about a vertical axis ($ZZ_1$) coinciding with the pivot axis of said bogie, and each of said intermediate chassis (61,62) carrying a pair of conical vertical pegs (71,72) which engage in a pair of cylindro-conical bushes carried by each of said decks.

8. An apparatus according to Claim 7, characterised in that one of said intermediate chassis (61) includes, at one of its ends, a first cross-beam (63) which carries a hollow spherical socket (63a) in its centre, said socket resting in a spherical cup (64) carried by said common bogie, and the second intermediate chassis (62) includes, at one of its ends, a second cross-beam (66) which is disposed above the upper surface of said second intermediate chassis, said second cross-beam (66) carrying in its centre a part of spherical ball (69) which is engaged in said hollow spherical socket (63a), said second cross-beam also carrying two abutments (70), one at each end, which bear against the first cross-beam via a cylindrical surface having a transverse axis and constituting a transverse articulation.

Fig. 1

Fig. 2

Fig. 3

Fig. 4

EP 0 320 420 B1

Fig. 5

Fig. 6

EP 0 320 420 B1

Fig. 7

Fig. 9

Fig. 8

Fig_10

Fig_11

EP 0 320 420 B1

1a

1

52    53    54

Fig. 12

55₁    55₂    55₃    55₄    55₅

59    57₁    58₁    57₂    58₂    57₃    59    56    59    57₄    58    57₅

Fig. 13

Fig. 14

Fig. 15

EP 0 320 420 B1

Fig.16

Fig.17